(19) Europäisches Patentamt
European Patent Office
Office européen des brevets

(11) **EP 2 036 591 A1**

(12) **DEMANDE DE BREVET EUROPEEN**

(43) Date de publication:
**18.03.2009 Bulletin 2009/12**

(51) Int Cl.:
***A62B 35/04*** *(2006.01)*

(21) Numéro de dépôt: **08290800.5**

(22) Date de dépôt: **26.08.2008**

(84) Etats contractants désignés:
**AT BE BG CH CY CZ DE DK EE ES FI FR GB GR HR HU IE IS IT LI LT LU LV MC MT NL NO PL PT RO SE SI SK TR**
Etats d'extension désignés:
**AL BA MK RS**

(30) Priorité: **13.09.2007 FR 0706416**

(71) Demandeur: **Sperian Fall Protection France 18104 Vierzon Cedex (FR)**

(72) Inventeurs:
• **Burlaud, Marc**
  **18570 Morthomiers (FR)**
• **Faye, Nicolas**
  **41210 Saint-Viâtre (FR)**

(74) Mandataire: **Eidelsberg, Olivier Nathan et al Cabinet Faber
22, avenue de Friedland
75008 Paris (FR)**

(54) **Elément textile à absorption d'énergie**

(57) Composant d'un dispositif d'arrêt de chute, notamment sangle ou longe de retenue, comportant un premier élément (10), un fil, s'étendant en longueur au moins entre un premier point (5) et un deuxième point (6) et un deuxième élément (11) s'étendant entre le premier point et le deuxième point, les deux éléments étant soumis à des forces de tension identiques aux premier et deuxième points, caractérisé en ce que le deuxième élément est un fil bobiné sous forme de spires hélicoïdales autour du premier élément, les deux fils formant un fil dit guipé.

FIG.3A

10

11

FIG.3B

**Description**

La présente invention se rapporte à un composant d'un dispositif d'arrêt de chute tel qu'un harnais de sécurité, en particulier une sangle et/ou une longe de retenue, ainsi qu'à un dispositif d'arrêt de chute comportant un composant de ce genre.

Actuellement, les sangles ou les longes de retenue utilisées dans les dispositifs d'arrêt de chute, tel que ceux comportant un harnais de sécurité, sont sensiblement rigides, et n'offre pas ou peu de capacité d'absorption d'énergie lors d'une chute du porteur du harnais, de sorte qu'il est nécessaire d'associer au dispositif des systèmes absorbeur d'énergie auxiliaire, qui en augmentent la complexité et le coût.

La présente invention vise un composant, par exemple une sangle ou une longe, d'un dispositif d'arrêt de chute, par exemple qui comporte un harnais de sécurité, dont s'équipe une personne, par exemple, travaillant en hauteur et qui doit être retenue en cas de chute, qui permet d'offrir à l'utilisateur une sorte d'amortissement de la chute et ainsi permet d'éviter les traumatismes liés à celle-ci notamment à la fin lorsque la vitesse passe brusquement de la vitesse de chute à la vitesse nulle.

Suivant l'invention, le composant est tel que défini à la revendication 1.

A partir d'un tel composant, on peut réaliser des éléments par tissage, tressage, tricotage ou analogue du composant, pour ainsi obtenir de manière très simple un élément, par exemple une sangle, une longe ou autre dispositif faisant partie ou constituant un dispositif antichute ayant une excellente capacité en tant que dispositif de retenue de chute. Lorsqu'une chute a lieu, le premier élément de plus courte longueur va s'étirer en partie et s'allonger sous l'effet du poids de la charge ou personne chutant, et le deuxième élément, qui avant étirement du premier élément comporte une sorte de jeu en longueur (sa longueur étant supérieure à celle du premier élément) va prendre une forme se rapprochant plus de celle du premier élément et notamment prendre une forme plus rectiligne, et en particulier va s'aligner avec le premier élément étiré, et le choc lié à la chute est amorti par l'action combinée de ces deux éléments.

De préférence la courbe caractéristique du premier élément donnant son pourcentage d'étirement en fonction de la force de traction qui lui est appliquée présente, après la plage d'élasticité, une plage d'allongement à force de traction constante ou à faible croissance s'étendant le long des abscisses sur au moins 25%, de préférence au moins 33%, notamment au moins 50%, notamment comprise entre 25% et 100%.

De préférence la plage d'élasticité est petite par rapport à la plage d'allongement à force de traction constante, notamment au moins 10 fois plus petite.

De préférence, la plage d'élasticité est petite, notamment s'étend sur une longueur le long des abscisses inférieure à 10%, notamment inférieure à 5%.

De préférence la courbe caractéristique du composant ou d'une partie du composant donnant son pourcentage d'étirement en fonction de la force de traction qui lui est appliquée présente, après la plage d'élasticité, une plage d'allongement à force de traction constante ou à faible croissance s'étendant le long des abscisses sur au moins 25%, de préférence au moins 33%, notamment au moins 50%, notamment comprise entre 25% et 100%.

De préférence la plage d'élasticité est petite par rapport à la plage d'allongement à force de traction constante, notamment au moins 10 fois plus petite.

De préférence, la plage d'élasticité est petite, notamment s'étend sur une longueur le long des abscisses inférieure à 10%, notamment inférieure à 5%.

En particulier, une sangle ou une longe de dispositif d'arrêt de chute peut être formée par une pluralité des fils dits guipés solidaires les uns des autres par tissage, tricotage ou analogue.

Suivant un autre mode de réalisation préféré de l'invention, le premier élément est un tronçon de sangle en forme de bande et le deuxième élément est un tronçon en forme de bande dont la longueur à vide ou sans tension est supérieure à la longueur à vide ou sans tension du premier élément en forme de bande et dont la longueur est sensiblement égale à la longueur de la première bande à l'état étiré maximum.

Suivant un mode de réalisation, le composant est une longe de retenue constituée de fils dits guipés.

Suivant un perfectionnement, le composant comporte une pluralité de fils guipés assemblés, par exemple par tricotage, tissage, tressage ou analogue, en un tissu enveloppe formant gaine, et dans cette gaine est disposé du matériau ayant une courbe caractéristique donnant son pourcentage d'étirement en fonction de la force de traction qui lui est appliquée présente, après la plage d'élasticité, une plage d'allongement à force de traction constante ou à faible croissance s'étendant le long des abscisses sur au moins 25%, de préférence au moins 33%, notamment au moins 50%, notamment comprise entre 25% et 100%.

En particulier le matériau dans la gaine est du POY.

Ce type de composant est particulièrement adapté au cas des chute avec passage par arête vive, la combinaison des fils guipés et du matériau à capacité d'étirement, notamment en POY.

La présente invention se rapporte également à un dispositif d'arrêt de chute, notamment qui comporte un harnais, et comportant un composant suivant l'invention, notamment une sangle ou une longe, notamment de retenue.

De préférence, le premier élément est en POY (partially oriented yarn) et le deuxième fil en un matériau thermoplastique, notamment en polyester.

Le POY est un fil en matériau classiquement utilisé dans la filature, par exemple thermoplastique tel que polyester, mais qui lors de sa fabrication n'a pas subi la totalité des étapes d'étirage, comme décrit dans de nombreux brevets américains, par exemple US 4736500, US 4736500, US 4244174, US 4415521.

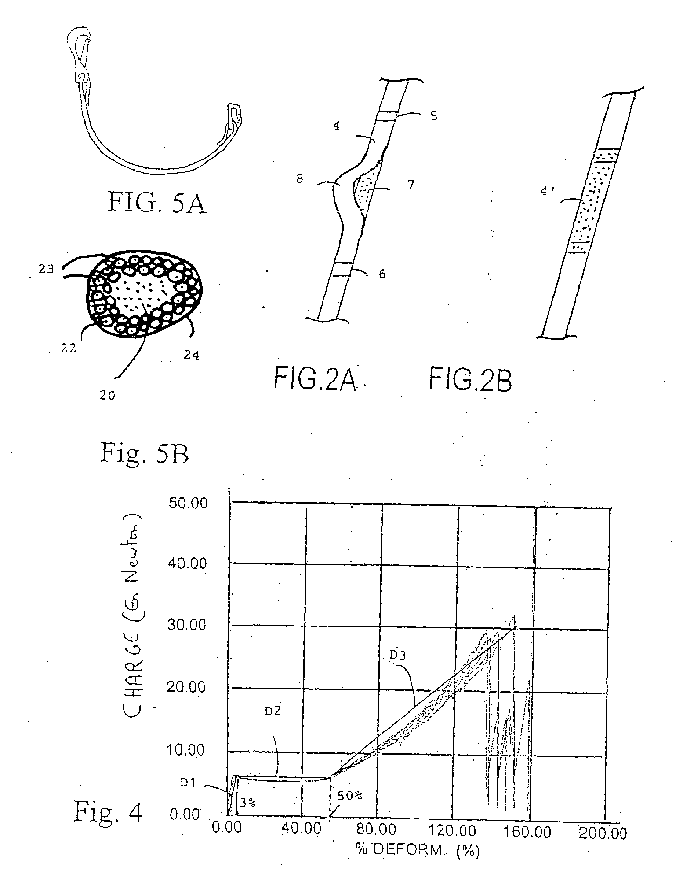

Le POY conserve ainsi une capacité à s'étirer sans avoir à appliquer une traction croissante sur au moins un domaine d'étirement tel qu'il ressort de sa courbe caractéristique ayant la forme de celle représentée à la figure 4.

On décrit maintenant, à titre d'exemple, des modes de réalisation de l'invention se rapportant aux dessins annexés, dans lesquels :

à la Figure 1a, il est représenté un harnais comportant une sangle suivant un mode de réalisation de l'invention ;
à la Figure 1b, il est représenté un harnais comportant une sangle suivant un autre mode de réalisation de l'invention ;
aux Figures 2A et 2B, il est représenté respectivement une partie des sangles des Figures la et 1b, à plus grande échelle;
aux Figures 3A, 3B et 3C, il est représenté un assemblage de fils suivant l'invention à l'état non étiré, puis à l'état étiré et enfin à l'état tissé d'une sangle ;
à la Figure 4, il est représenté pour un fil guipé décrit précédemment ou pour une partie de la sangle décrite précédemment la forme de la courbe donnant l'étirement d'un tronçon du fil ou de la sangle en fonction de la force de traction appliquée à ses deux extrémités ;
à la Figure 5A il est représenté une longe de retenue suivant l'invention ;
à la figure 5B il est représenté, en coupe transversale, la longe de la figure 5A, et aux figures 6, 7 et 8 diverses configurations des tests définis à l'annexe 1.

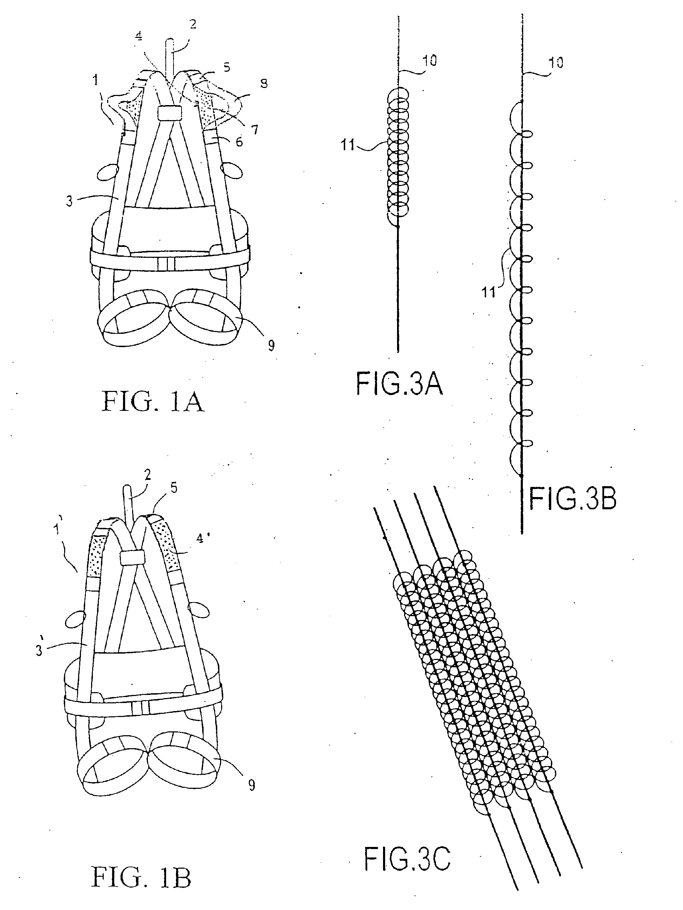

A la Figure 1a, un harnais 1 comporte deux cuissardes 9 destinées à entourer la cuisse du porteur du harnais de sécurité antichute, ce harnais étant relié à un dispositif de retenue par un fil de liaison 2. Le harnais 1 comporte plusieurs sangles, notamment deux sangles 3 destinées à passer sur les épaules du porteur du harnais, ces sangles, en fonction de la conception du harnais, pouvant être agencées de différentes manières et notamment celle représentée à la Figure 1. Chaque sangle 3 comporte au moins un tronçon 4 s'étendant entre deux points 5 et 6. Ce tronçon 4, entre les deux points 5 et 6, est constitué d'un premier élément de sangle 7 dont la longueur est égale à la longueur de la sangle entre les deux points 5 et 6, et d'un deuxième élément 8 en forme de bande s'étendant également entre les points 5 et 6. Le deuxième élément 8 est en continuité avec le reste de la sangle et l'élément 7 est fixé au moins aux deux points 5 et 6 par exemple par soudure, collage, tricotage, etc au reste de la sangle, en face de l'élément 8. Pour ce faire, on prend la sangle 3 et on forme une sorte de boucle pour former la partie de bande 8 et on fixe ensuite la bande 7. La longueur totale de l'élément 8 s'étendant entre les points 5 et 6, lorsqu'il est disposé rectiligne, est supérieure à la longueur de l'élément 7 à vide ou non tendu, également lorsqu'il est disposé rectiligne.

A la figure 1b, il est représenté un autre mode de réalisation possible, dans lequel la sangle 3' comporte un tronçon 4' fixé à ses deux extrémités à la sangle 3' (après avoir découpé celle ci), ce tronçon 4' étant réalisé à partir de fils guipés dont l'âme est en POY et la gaine constituée de fils en matière textile classique thermoplastique ayant été totalement étiré à sa fabrication, les fils de la gaine entre les points 5 et 6 ayant, lorsqu'on les dispose rectilignes, une plus grande longueur que le ou les fils de l'âme en POY à l'état non étiré et également disposé rectilignes.

Lorsqu'une chute a lieu, l'élément 7 (respectivement l'âme des fils guipés du tronçon 4') va voir sa longueur augmenter en raison de la tension. De manière simultanée, la bande 8 (respectivement les fils formant la gaine des fils guipés du tronçon 4') va alors tendre à se rapprocher de l'état parallèle à la bande 7 (respectivement l'âme des fils guipés) en jouant de son jeu lié à sa différence de longueur initiale avec la bande 7 (respectivement l'âme des fils guipés) à l'état non étiré. A la fin de la chute, la bande 8 (respectivement chaque fil de gaine) a , notamment dans le cas où le calcul a été réalisé de manière parfaite, en fonction du poids, de la hauteur de la chute, etc., la même longueur que l'élément 7 (respectivement chaque fil d'âme). L'amortissement peut être tel, cependant, que l'élément 8 (respectivement chaque fil de gaine), à la fin de la chute, ait encore un léger jeu par rapport à la bande 7 (respectivement l'âme des fils guipés), ou au contraire se soit étiré quelque peu pour avoir une longueur égale à celle de la bande 7 à l'état étiré. En particulier la bande 7 de la sangle est à base de fils guipés comportant une âme en POY ou directement en POY, tandis que le reste de la sangle 3 et la bande 8 sont en un matériau textile classique ayant été étiré totalement à sa fabrication.

Aux Figures 3A, il est représenté un fil avec lequel on peut réaliser la sangle de la figure 1b réalisant les mêmes fonctions que l'ensemble des deux bandes du tronçon de sangle de la Figure 1a. Pour cela, on utilise deux fils, un premier fil 10 rectiligne et un deuxième fil 11 enroulé sous forme de spires hélicoïdales autour du premier fil. Le fil 10 s'étend sensiblement rectilignement, tandis que le fil 11 s'étend à distance du fil 10 avec une plus grande longueur. L'ensemble des deux fils 10 et 11 forment ce que l'on appelle un fil guipé. Lorsqu'une chute a lieu, le fil 10 s'étire et simultanément le fil 11 se déploie et tend à se rapprocher du fil 10. Sur la base de fils guipés de ce genre, on peut réaliser des sangles par tissage ou tricotage en tricotant ou tissant des fils guipés (chacun constitué d'un fil 10 et d'un fil 11), comme représentés à la Figure 3A ou à la Figure 3B, pour obtenir une sangle tissée, comme représentée à la Figure 3C, sangle qui peut être ainsi fixée entre les points 5 et 6 de la sangle 1' pour former le tronçon 4' ou adapté en tant que bande 7 à la sangle 1. Dans ce cas (figure la) on peut également, à la place de fils guipés utiliser des fils en POY uniquement, la fonction des fils de gaine étant réalisée par la bande 8.

Aux figures 5A et 5B, il est représenté une longe de retenue qui est réalisé par un tressage de fils guipés dont l'âme est en POY. Cette longe comporte un élément central 20 formant âme principale, en POY, et une gaine constituée d'un tressage de fils 21 guipés entoure cette âme principale, chaque fil guipé ayant une âme 22 en POY et une gaine 23 constituée d'un tressage de fils en un matériau textile, notamment thermoplastique, classique et qui n'est pas du POY, c'est à dire qu'il a été fabriqué suivant les méthodes d'étirement complet classique. En outre, l'ensemble peut ou non comporter une gaine supplémentaire 24 extérieure en forme de sangle tubulaire en polyester, polyamide ou autre matière textile thermoplastique classique (qui n'est pas en POY, c'est à dire qui a été sensiblement complètement étiré à sa fabrication). La longe de retenue passe avec succès le test de chute sur arête vive décrit à l'annexe 1 ci après.

De préférence, le fil 10 ou l'élément 7 sont en un matériau ayant une certaine capacité à l'étirement, notamment en POY, c'est à dire comporte dans sa courbe donnant le pourcentage d'allongement en fonction de la force de traction une partie en palier sensiblement horizontale après le segment correspondant à la partie élastique.

On peut tracer la courbe donnant le pourcentage d'étirement d'un fil, d'une sangle ou de tout élément en fonction de la force de traction appliquée jusqu'à rupture.

Pour réaliser cette courbe, on utilise un dynamomètre, par exemple celui disponible auprès de la société Adamel Lhomargy à Gradient d'Allongement constant sous la dénomination DY 31 et suivant le mode opératoire

Pour un titre (Dtex) compris entre 0 et 100, on utilise le capteur de force 10N et les pinces pneumatiques munies de mords en caoutchouc striés et on choisi le programme 10N-500mm.

Pour un titre (Dtex) compris entre 100 et 2000, on utilise le capteur de force 100N et les pinces pneumatiques munies de mords en caoutchouc striés et on choisi le programme 100N-500mm.

On règle ensuite l'écartement à 500mm, puis on initialise le capteur de force et on l'étalonne par l'option « calibrage » classique.

On prélève ensuite un échantillon de l'élément que l'on souhaite analyser en choisissant une dimension qui correspond au domaine du titre choisi, par exemple un fil guipé ou plusieurs fils guipés ou une bande d'une sangle constitué d'un tissage de fils guipés ou d'un tronçon d'une longe formée à partir de fils guipés, et on le serre à ses deux extrémités entre les mâchoires du dynamomètre. On augmente progressivement la force d'étirement et on obtient une courbe ayant l'aspect de celle représentée à la figure 4.

Cette courbe peut être par approximation représentée sous la forme d'une succession de trois segments, D1, D2 et D3, et est caractéristique d'un élément suivant un mode de réalisation préféré de l'invention.

Le premier segment D1 ici très petit, correspond à la partie élastique de l'élément dont on trace la courbe. En effet l'élément suivant l'invention n'est de préférence pas élastique ou est peu élastique. Ce premier segment est croissant et s'étend sur une plage de 0 à 10%, ici jusqu'à 3%.

Le deuxième segment D2 est sensiblement horizontal et correspond à une partie dans laquelle l'élément peut s'étirer à force de traction sensiblement constante, ou éventuellement avec une faible croissance de la force de traction (la pente est soit nulle, soit faible, et notamment plus petite que celle de la partie D1 élastique et que celle de la dernière partie D3 décrite ci après).

Ce deuxième segment D2 correspond à l'allongement du matériau en POY de l'âme du fil guipé. Suivant un mode de réalisation préféré de l'invention, ce segment D2 s'étend le long de l'axe des abscisses sur au moins 25%, de préférence au moins 33%, notamment au moins 50% par exemple compris entre 33% et 100%. Sur l'exemple représenté à la figure 4, il s'étend sur environ 47%.

Enfin, la courbe comprend un troisième segment D3, de pente croissante et qui s'étend jusqu'à la rupture de l'élément. La pente de ce segment D3 est supérieure à celle du segment D2.

Quant au fil 11 ou à la sangle 8, ils sont de préférence en un matériau thermoplastique, par exemple en polyester, en Kevlar ou en polyamide ou analogue, mais ayant subi toutes les étapes classiques d'étirage lors de sa fabrication et qui a donc une moindre capacité à s'étirer par rapport à celle du fil 10 ou à l'élément 7.

De préférence, suivant l'invention, l'élément a une courbe caractéristique de la forme de celle représenté à la figure 4 et notamment est en POY. cependant, on pourrait également ne pas prévoir un élément avec une telle courbe caractéristique et qui notamment pourrait avoir un deuxième segment de très faible extension. Ce serait par exemple le cas pour des fils guipés dont l'âme ne serait pas en POY mais en simple matériau thermoplastique entièrement étiré au moment de sa filature.

Comme fil guipé on peut par exemple utilisé le fil de la société FILIX, référencé DA 5464 et constitué d'une âme en PES POY 4/295/66 de 1180 Dtex représentant 51,30% de la composition du fil et de deux couvertures intérieure et extérieure, chacune en PA 6,6 FTS HT Cordura T440 de 560 Dtex représentant chacune 24,30% du fil, le fil guipé ayant un titre final de 4574 Dtex à +-7% et les couvertures ayant une torsion de 1400 t/m à +-7%.

On peut également utilisé comme fil guipé le fil de la société FILIX, référencé DA 5664 et constitué d'une âme en PES POY 4/295/66 de 1180 Dtex, à 264 filaments et représentant 74,60% de la composition du fil et de deux couvertures intérieure et extérieure, chacune en Kevlar stretch broken Nm 1/50 de 200 Dtex représentant chacune 12,70% du fil, le fil guipé ayant un titre final de 2152 Dtex à +-7% et les couvertures ayant une torsion de 1500 t/m à +-7%.

Annexe 1

Exigences appareillage d'essai et méthodes d'essai pour les longes avec absorbeur d'énergie lorsque les instructions d'utilisation et le marquage mentionnent une caractéristique concernant l'utilisation à l'horizontale

B1 Exigences

B.1.1 Performance dynamique

Lorsqu'elle est soumise à essai conformément à B.3.1 avec une masse d'essai équivalente à la charge nominale maximale, mais d'au moins 100 kg, la masse d'essai doit être maintenue et la force de freinage $F_{max}$ de la masse ne doit pas dépasser 6 kN.

B.1.2 Résistance statique

Lorsqu'elle est soumise à essai conformément à B.3.2 avec une force ou masse d'essai correspondant à 3 fois la charge nominale maximale, mais d'au moins 4,5 kN, la longe avec absorbeur d'énergie doit résister à la force ou masse d'essai appliquée pendant une période de $3\,\left(^{+0,25}_{0}\right)$ min.

B.2 Appareillage d'essai

L'appareillage d'essai doit être conforme à 4.4, 4.5 et 4.6 de l'EN 364: 1992.

B.3 Méthodes d'essai

Utiliser un carré en acier étiré conforme à l'EN 10278 (matériau C 45/ E 355 GC (ST60) selon l'EN 10025-2) comme arête d'appui. Les dimensions minimales de la barre en acier doivent être de (10 x 70) mm et le rayon de l'arête de (0,5 ± 0,1) mm.

B.3.1 Performance dynamique

B.3.1.1 Échantillonage

Les échantillons pour essai doivent comprendre la longe et l'absorbeur d'énergie. Au moins deux échantillons pour essai doivent être fournis.

B.3.1.2 Mode opératoire d'essai

Attacher une chaîne ou un câble en acier à l'élément d'accrochage de la longe et connecter la chaîne ou le câble en acier au point d'ancrage rigide de la structure d'essai. Attacher la masse d'essai spécifiée en B.2 avec une tolérance de $\left(^{+1}_{0}\right)$ kg, en incorporant un instrument de mesurage de la force à l'autre extrémité de l'absorbeur d'énergie.

Effectuer deux essaie de chute, l'un en positionnant la masse d'essai à angle droit par rapport à l'arête, l'autre avec un décalage latéral de 1,50 m. Un échantillon pour essai neuf peut être utilisé pour chaque essai. La figure B.1 représente la configuration d'essai, avec une vue en plan montrant le décalage latéral.

Soulever la masse d'essai de ($2.000\,^{+50}_{0}$) mm, à une distance horizontale maximale de 500 mm de l'arête.

Régler la longueur de la chaîne ou du câble en acier de manière à ce que le système soit bien tendu lorsque la masse d'essai est soulevée.

Maintenir la masse d'essai à l'aide du dispositif à largage rapide.

Relâcher la masse d'essai sans vitesse initiale.

Mesurer la force d'arrêt et vérifier que les exigences en B.1.1 sont satisfaites.

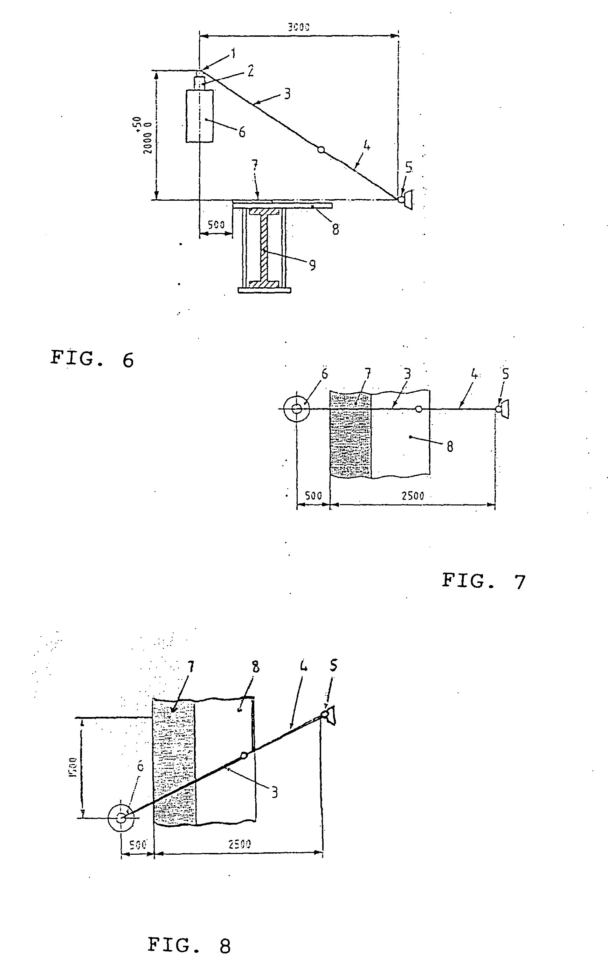

Aux figures 6 et 7, il est représenté la configuration d'essai respectivement en vue latérale et en vue en plan à 90° par rapport à l'arête et à la figure 8, la configuration d'essai vue en plan, avec décalage latérale.

Les légendes des figures 6, 7 et 8 sont les suivantes. Légende

101 Dispositif à largage rapide
102 Instrument de mesurage de la force
103 Longe avec absorbeur d'énergie
104 Chaîne/ câble en acier
105 Point d'ancrage rigide
106 Masse d'acier rigide
107 Barre
108 Plateforme
109 Poutre pont

B.3.2 Résistance statique

Après l'essai de performance dynamique conformément à B.3.1, remplacer la masse d'essai par la masse ou force d'essai spécifiée en B.1.2 avec une tolérance de $\left(^{+1}_{0}\right)$ kg et la maintenir pendant 3 min pendant $\left(3\,^{+0,25}_{0}\right)$ min.

**Revendications**

1. Composant d'un dispositif d'arrêt de chute, notamment sangle ou longe de retenue, comportant un premier élément (10), un fil, s'étendant en longueur au moins entre un premier point(5) et un deuxième point (6) et un deuxième élément (11) s'étendant entre le premier point et le deuxième point, les deux éléments étant soumis à des forces de tension identiques aux premier et deuxième points, **caractérisé en ce que** le deuxième élément est un fil bobiné sous forme de spires hélicoïdales autour du premier élément, les deux fils formant un fil dit guipé.

2. Composant suivant la revendication 1, **caractérisé en ce que** la courbe caractéristique du premier élément donnant son pourcentage d'étirement en fonction de la force de traction qui lui est appliquée présente, après la plage d'élasticité (D1), une plage (D2) d'allongement à force de traction constante ou à faible croissance s'étendant le long des abscisses sur au moins 25%, de préférence au moins 33%, notamment au moins 50%, notamment comprise entre 25% et 100%.

3. Composant suivant la revendication 2, **caractérisé en ce que** la plage d'élasticité (D1) est petite par rapport à la plage (D2) d'allongement à force de traction constante, notamment au moins 10 fois plus petite.

4. Composant suivant la revendication 2 ou 3, **caractérisé en ce que** la plage d'élasticité est petite, notamment s'étend sur une longueur le long des abscisses inférieure à 10%, notamment inférieure à 5%.

5. Composant suivant l'une des revendications 1 à 4, **caractérisé en ce que** le composant, notamment une sangle, est formé par une pluralité des fils dits guipés solidaires les uns des autres par tissage, tricotage ou analogue.

6. Composant suivant l'une des revendications 1 à 5, **caractérisé en ce que** le composant est une longe de retenue constituée de fils dits guipés tressés.

7. Composant suivant l'une des revendications 1 à 6, **caractérisé en ce que** le composant comporte une pluralité de fils guipés assemblés, par exemple par tricotage, tissage, tressage ou analogue, en un tissu enveloppe formant gaine, et du matériau ayant une courbe caractéristique donnant son pourcentage d'étirement en fonction de la force de traction qui lui est appliquée, qui présente, après la plage d'élasticité, une plage d'allongement à force de traction constante ou à faible croissance s'étendant le long des abscisses sur au moins 25%, de préférence au moins 33%, notamment au moins 50%, notamment comprise entre 25% et 100%.

8. Composant suivant l'une des revendications 1 à 7, **caractérisé en ce que** le premier élément est en POY (partially oriented yarn) et le deuxième fil en un matériau thermoplastique, notamment en polyester.

9. Dispositif d'arrêt de chute, notamment un harnais, comportant un composant, notamment une sangle ou une longe de retenue, suivant l'une des revendications précédentes.

FIG. 1A

FIG. 1B

FIG.3A

FIG.3B

FIG.3C

FIG. 5A

FIG.2A          FIG.2B

Fig. 5B

Fig. 4

FIG. 6

FIG. 7

FIG. 8

Europäisches
Patentamt

European
Patent Office

Office européen
des brevets

# RAPPORT DE RECHERCHE EUROPEENNE

Numéro de la demande

EP 08 29 0800

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | FR 2 107 990 A (TURCKSIN) 12 mai 1972 (1972-05-12) * figures 1-4 * * page 3, ligne 13-16,19,20 * * page 4, ligne 35-37 * * page 5, ligne 21-23,25,26 * ----- | 1-6,8,9 | INV. A62B35/04 |
| A | EP 1 746 189 A (COGNON MORIN) 24 janvier 2007 (2007-01-24) * le document en entier * ----- | 1-9 | |

DOMAINES TECHNIQUES
RECHERCHES (IPC)

A62B
F16F
D02G
D03D
D07B

Le présent rapport a été établi pour toutes les revendications

| Lieu de la recherche | Date d'achèvement de la recherche | Examinateur |
|---|---|---|
| La Haye | 16 décembre 2008 | Paul, Adeline |

CATEGORIE DES DOCUMENTS CITES

X : particulièrement pertinent à lui seul
Y : particulièrement pertinent en combinaison avec un
   autre document de la même catégorie
A : arrière-plan technologique
O : divulgation non-écrite
P : document intercalaire

T : théorie ou principe à la base de l'invention
E : document de brevet antérieur, mais publié à la
   date de dépôt ou après cette date
D : cité dans la demande
L : cité pour d'autres raisons

   ...............................................................................................
& : membre de la même famille, document correspondant

EPO FORM 1503 03.82 (P04C02)

**EP 2 036 591 A1**

**ANNEXE AU RAPPORT DE RECHERCHE EUROPEENNE
RELATIF A LA DEMANDE DE BREVET EUROPEEN NO.**

EP 08 29 0800

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

16-12-2008

| Document brevet cité au rapport de recherche | | Date de publication | Membre(s) de la famille de brevet(s) | | Date de publication |
|---|---|---|---|---|---|
| FR 2107990 | A | 12-05-1972 | BE | 772663 A1 | 17-01-1972 |
| | | | DE | 7035550 U | 27-05-1971 |
| | | | IT | 939463 B | 10-02-1973 |
| EP 1746189 | A | 24-01-2007 | AT | 406472 T | 15-09-2008 |
| | | | CA | 2551515 A1 | 19-01-2007 |
| | | | FR | 2888855 A1 | 26-01-2007 |
| | | | US | 2007029308 A1 | 08-02-2007 |

EPO FORM P0460

Pour tout renseignement concernant cette annexe : voir Journal Officiel de l'Office européen des brevets, No.12/82

**EP 2 036 591 A1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 4736500 A
- US 4244174 A

- US 4415521 A